# EUROPÄISCHE PATENTANMELDUNG

(11) **EP 1 132 073 A2**
(43) Veröffentlichungstag der Anmeldung: **12.09.2001**
(21) Anmeldenummer: 01104648.9
(22) Anmeldetag: 23.02.2001
(51) Int. Cl.: A61H 19/00, H02J 7/02

(54) **Vibrator**

(30) Priorität: 25.02.2000 DE 10009003
(71) Anmelder: Brueggemann, Heinrich, 28197 Bremen (DE)
(72) Erfinder: Brueggemann, Heinrich, 28197 Bremen (DE)
(74) Vertreter: Schuster, Gregor, Dipl.-Ing.

(57) **Zusammenfassung**

Es wird ein Gerät (Vibrator), das zur Stimulation und Massage von menschlichen Körperregionen und Höhlen des menschlichen Körpers dient, vorgeschlagen. Der Akkumulator des Geräts wird mittels induktiver Energieübertragung kontaktlos aufgeladen

## Beschreibung

### Stand der Technik

Die Erfindung geht aus von einem Gerät (Vibrator), das zur Stimulation und Massage von menschlichen Körperregionen dient nach der Gattung des Anspruchs 1.

Geräte (Vibratoren), die zur Stimulation und Massage von menschlichen Körperregionen dienen, müssen durch ihren direkten Körperkontakt zum Menschen Ansprüchen genügen, die mit denen medizinischer Instrumente vergleichbar sind. Gleichzeitig muß bedacht werden, das durch die körperliche Erregung und den Begleitumständen des Einsatzes von Vibratoren die Bedienbarkeit auch bei eingeschränkter Feinmotorik, Dunkelheit usw. gewährleistet sein muß. Die im Handel befindlichen Massagegeräte erfüllen dies nur bedingt. Bei den auf dem Markt befindlichen Modellen ergeben sich Schwierigkeiten bei Benutzung, Bedienung und Reinigung. Kriterien, die durch die Anwendung entsprechender Techniken und Einsatz der richtigen Materialien erfüllt werden können.

Die im Handel üblichen Vibratoren werden elektromotorisch angetrieben und erzeugen Bewegungen vibrierender, rotierender oder pulsierender Art, die direkt an den zu massierenden oder stimulierenden Körperbereich weitergeleitet werden, oder diese Bewegungen an Objekte oder Körperteile weiterleitet, welche wiederum diese Bewegungen auf den Körper aufbringen. Die Energieversorgung erfolgt entweder durch eine externe Energiequelle oder durch Energiezellen wie Batterien oder Akkumulatoren. Die Energiezellen müssen nach Leistungsabgabe ausgetauscht oder zum Wiederaufladen entnommen werden. Dies beinhaltet die Gefahr einer fehlerhaften Bedienung.

Verbleiben die Akkumulatoren dauerhaft im Vibrator, werden diese über elektrische Kontakte aufgeladen. Aufgrund dieser elektrischen Kontakte besteht die Gefahr von elektrischen Schlag und Korrosion. Diese Vibratoren sind nicht oder nur sehr bedingt flüssigkeitsfest. Der bei Auf- und Entladevorgängen entstehende Wasserstoff wird nicht gebunden oder umgewandelt. Daher besteht eine Gefahr durch Knallgasbildung.

Bei Vibratoren mit externer Energieversorgung wird von dem Bediener die elektrische Leitung als stromzuführendes Bauteil bei der Handhabung als störend empfunden.

Bei einem Großteil der derzeitigen Geräte werden zur Regelung der Vibrationsstärke Drehpotentiometer eingesetzt. Der Regler ist meist gleichzeitig Abdeckung für die Batterieaufnahme. Diese Systeme bieten den stromführenden Elementen keinen Schutz vor Wasser, künstlichen Gleitmitteln oder Körperflüssigkeiten. Diese Geräte dürfen weder in der Badewanne noch Dusche eingesetzt werden, eine Reinigung mit Wasser muß ausgesprochen vorsichtig erfolgen. Zusätzlich wird die Reinigung durch auf das Regelelement aufgebrachte Strukturen und Fugen erschwert. Die Struktur (meist Rillen) sollen einen besseren Halt bei der Einstellung ermöglichen. Dies versagt allerdings beim Einsatz von Gleitmitteln.

Eine Einhandbedienung ist kaum möglich, aufgebrachte Symbole sind nicht tastbar und es ist ohne Ausprobieren nicht feststellbar, in welche Drehrichtung die Vibration zu- oder abnimmt. Bei diesem gängigen Typ von Regler geschieht es zudem häufig, daß bei Drehregelung das Batteriefach unbeabsichtigt geöffnet wird.

Auch wird beim Umfassen des Vibratorenendstücks der Regler schnell ungewollt verstellt.

Der bedingte Wasserschutz, bei als wasserfest angebotenen Vibratoren, erfolgt durch das Überstülpen einer flexiblen Kunststoffkappe über den Regler oder den Einsatz von Dichtringen. Selbst bei diesen Geräten wird von einem Unterwassereinsatz abgeraten.

Weiterhin werden Geräte mit mehreren Vibrationsmotoren angeboten. Die Bedienelemente werden dadurch entsprechend kompliziert und unübersichtlich. Vibratoren bei denen die Bedienung über eine kabelgestützte Fernbedienung erfolgt, weisen ebenfalls Schwierigkeiten bei der Reinigung und zusätzlich Probleme mit zu klein ausgelegten Steuerelementen auf.

Die Energieversorgung erfolgt durchgängig mit auszutauschenden Einweg- und Mehrwegbatterien (Akkus) in Mignon-, seltener Mono-Größe. Der Vorgang des Energiezellenaustausch verlangt Fingerfertigkeit, die während des Einsatzes nicht immer gegeben ist, sowie ein zu öffnendes Batteriefach, das nur unzureichend gegen Verschmutzung und Feuchtigkeit geschützt ist.

### Die Erfindung und ihre Vorteile

Das erfindungsgemäße Gerät mit den kennzeichnenden Merkmalen des Anspruchs 1 hat dem Stand der Technik gegenüber den Vorteil, daß die hohen Ansprüche an die Vermeidung von durch Körperflüssigkeiten übertragbarer Krankheiten und den Erhalt der Intimhygiene gewährleistet werden und trotzdem eine sichere Handhabung, auch beim Gebrauch in feuchter und nasser Umgebung, in bezug auf Körperflüssigkeiten, Hilfsmitteln zur Erhöhung der Gleiteigenschaften sowie möglichen Orten des Gebrauchs wie Dusche oder Badewanne sichergestellt ist. Erreicht wird dies durch die kontaktlose Wiederaufladung des ständig im Gerät verbleibenden Akkumulators.

Nach einer vorteilhaften Ausgestaltung der Erfindung ist die Außenhülle vollständig geschlossen. Daher ist der Einsatz in feuchter oder nasser Umgebung sowie die Reinigung und Desinfektion bedenkenlos möglich, da das Gerät flüssigkeitsfest und wasserdicht ist.

Nach einer weiteren vorteilhaften Ausgestaltung der Erfindung wird die elektronische Steuerung durch mindestens ein elektrisches Schaltelement bedient. Regler sind am Gerät nicht vorhanden, da sie sich nur schwierig und aufwendig gegen Flüssigkeit abdichten lassen und selbst dann verbleiben Gehäusefugen, die schwierig zu Reinigen sind und die Gefahr von Verkeimung beinhalten.

Nach einer weiteren vorteilhaften Ausgestaltung der Erfindung ist das elektrische Schaltelement unterhalb der Außenhülle angeordnet. Damit treten Dichtigkeitsprobleme herkömmlicher Regler nicht auf.

Nach einer diesbezüglichen Ausgestaltung der Erfindung ist die Außenhülle im Bereich des elektrischen Schaltelements elastisch ausgebildet.

Nach einer diesbezüglichen Ausgestaltung der Erfindung ist die Außenhülle im Bereich des elektrischen Schaltelements besonders ausgestaltet (Textur, Höhe). Durch Ertasten wird somit eine fehlerfreie Funktionszuordnung des elektrischen Schaltelements möglich.

Nach einer weiteren vorteilhaften Ausgestaltung der Erfindung wird ein Druckunterschied, der insbesondere durch Temperaturdifferenzen auftritt, im Geräteinneren durch eine Membran ausgeglichen. Bevorzugt ist die Membran mikroporös, atmungsaktiv und flüssigkeitsdicht, so dass der Druckausgleich ohne das Flüssigkeit eindringt, vorgenommen wird. Außerdem wird durch die Membran das Ansaugen von Flüssigkeiten durch Dichtungsspalten verhindert.

Nach einer weiteren vorteilhaften Ausgestaltung der Erfindung nimmt eine im Geräteinneren befindliche Trockenpatrone Feuchtigkeit aus dem Geräteinneren auf. Dadurch wird Restflüssigkeit gebunden und das Gerät wird vor Korrosion und Ausfall geschützt.

Nach einer weiteren vorteilhaften Ausgestaltung der Erfindung nimmt eine im Geräteinneren befindliche Katalysatorpatrone den beim Lade- und Entladevorgängen von Akkumulatoren entstehenden Wasserstoff auf oder wandelt diesen um. Dadurch wird die Entstehung von Knallgas verhindert.

Nach einer weiteren vorteilhaften Ausgestaltung der Erfindung wird das Energieniveau des Akkumulators durch Signal durch das Gerät angezeigt. Diese Kontrollfunktion sieht ein optisches oder ein akustisches oder ein fühlbares, beispielsweise durch gesteuerte Veränderung des Verhaltens der elektromotorischen Antriebseinrichtung während des Gebrauchs, Signal vor, um diese Information zu vermitteln.

Nach einer weiteren vorteilhaften Ausgestaltung der Erfindung wird der Ladezustand des Akkumulators durch Signal (optisch, akustisch) durch die Ladeeinheit angezeigt.

Weitere Vorteile und vorteilhafte Ausgestaltungen der Erfindung sind der nachfolgenden Beschreibung, der Zeichnung und den Ansprüchen entnehmbar.

### Zeichnung

Ausführungsbeispiele des Gegenstandes der Erfindung sind in der Zeichnung und im Folgenden näher beschrieben. Es zeigen:
- Fig. 1: eine Schnittansicht eines Vibrators mit Ladeeinheit und
- Fig. 2: eine Ansicht der elektrischen Schaltelemente eines Vibrators.

### Beschreibung des Ausführungsbeispiels

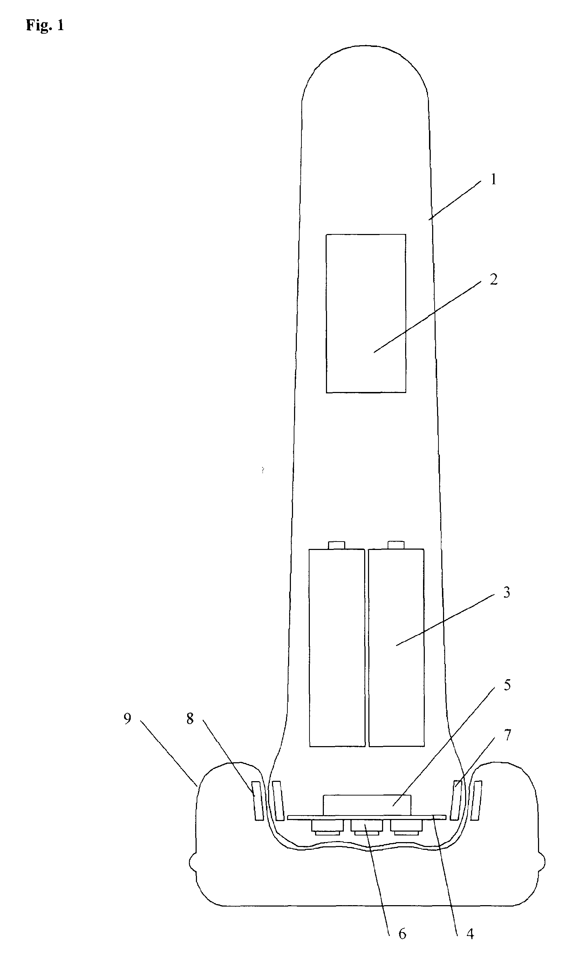

Fig. 1 zeigt schematisch einen Vibrator in einer Ladeeinheit 9. Die Aussenhülle 1 des Vibrators umschließt die elektromotorische Antriebseinrichtung 2, zwei Akkumulatoren 3, die Platine 4, die mit der elektronischen Steuerung 5 bestückt ist, den elektrischen Schaltelementen 6, sowie der Sekundärspule 7. In der Ladeeinheit 9, die den Vibrator passgenau aufnimmt, befindet sich die Primärspule 8. Diese ist exakt gegenüber der Sekundärspule gelagert.

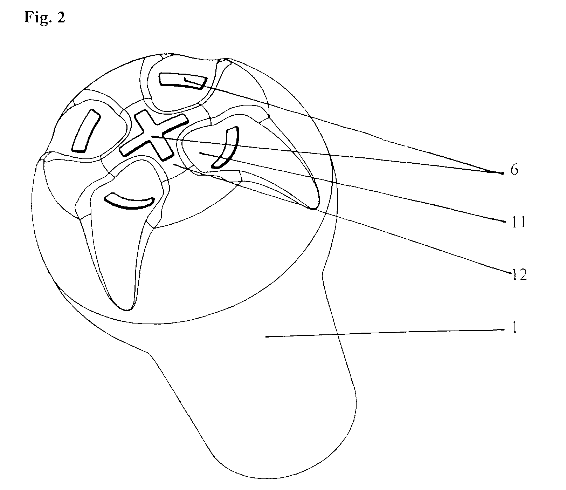

Fig. 2 zeigt eine Ansicht der elektrischen Schaltelemente 6 eines Vibrators. Dieser Bereich ist geprägt durch einen erhöhten elastischen Bereich 11 und einem vertieften elastischen Bereich 12.

Neben dieser klassische Vibratorform sind noch weitere Ausführungen denkbar:
Ausführung "Afterwards": stabförmig mit einzelnen Erhebungen
Ausführung "Pointer": für eine flache Penetration

Ausführung "Fingervib": Dem Griff-/Handstück ist ein Schaft von mindesten 40 mm Länge angefügt, in dem der vibrationserzeugende Motor eingebettet ist. An diesem Schaft angefügt befinden sich offene Führungen für Finger. Diese Führung besteht aus einem T-förmigen Mittelstück, daß zwischen zwei Finger geklemmt wird und Außenstücken, die an den Fingern anliegen. Wird dieses Gerät auf die Finger gesteckt/geklemmt, befindet sich der Motor über dem Fingerrücken. In Betrieb setzen sich die Vibrationen des Motors bis in die Fingerspitzen fort. Diese können dann zur Stimulation/Massage eingesetzt werden. Bei der Anwendung dieses Gerätes verliert der Anwender nicht das Empfinden von Druck, Temperatur und Feuchtigkeit.

Ausführung "Eichelschmeichler": Dem Griff-/Handstück ist ein Schaft von mindestens 40 mm Länge angefügt, in dem der virbrationserzeugende Motor eingebettet ist und dessen Ende eine Mulde angefügt ist, die mindestens 35 mm Innendurchmesser beschreibt. Die Eichel kann in diese Mulde gelegt und der Virbrator mit der Mulde über die Eichel bewegt werden. Für den Benutzer ergibt sich daraus eine regelbare Stimulation der Eichel durch Vibration, sowie Reibung und Druck, dessen Stärke er selber mit der Hand bestimmt.

Ausführung "Flutscher": Dem Griff-/Handstück ist ein Schaft von mindestens 40 mm Länge angefügt, in dem der vibrationserzeugende Motor eingebettet ist und dessen Ende als Mulde ausgeformt ist. Über diesen Schaft wird ein flüssigkeitsgefüllter Endlosschlauch (verlängerte Donutform) gestülpt. Der Penis kann nun mit der Eichel an die Mulde gesetzt und der Endlosschlauch über Penis und Schaft auf und ab bewegt werden. Für den Benutzer ergibt sich daraus eine regelbare Stimulation der Eichel durch Vibration und variablen Druck und Unwuchtgefühl an Eichel und Penisschaft, dessen Stärke er selbst mit der Hand bestimmt.

Alle hier dargestellten Merkmale können sowohl einzeln als auch in beliebiger Kombination miteinander erfindungswesentlich sein.

### Bezugszahlenliste

- 1: Außenhülle
- 2: Antriebseinrichtung
- 3: Akkumulator
- 4: Platine
- 5: Elektronische Steuerung
- 6: Elektrisches Schaltelement
- 7: Sekundärspule
- 8: Primärspule
- 9: Ladeeinheit
- 11: Erhöhter elastischer Bereich
- 12: Vertiefter elastischer Bereich

## Patentansprüche

1. Gerät zur Stimulation und Massage von menschlichen Körperregionen
- mit einer Außenhülle (1),
- mit einer elektromotorischen Antriebsvorrichtung (2),
- mit einem durch eine Ladeeinheit (9) ladbaren Akkumulator (3) und
- mit einer elektronischen Steuerung (5),
**dadurch gekennzeichnet**,
- daß der Akkumulator (3) durch induktive Energieübertragung kontaktlos aufladbar ist.

2. Gerät nach Anspruch 1, **dadurch gekennzeichnet**, daß die Außenhülle (1) vollständig geschlossen und daher flüssigkeitsfest und wasserdicht ist.

3. Gerät nach Anspruch 1 oder Anspruch 2, **dadurch gekennzeichnet**, daß die elektronische Steuerung (5) durch mindestens ein elektrisches Schaltelement (6) bedient wird.

4. Gerät nach einem der vorhergehenden Ansprüche, **dadurch gekennzeichnet**, daß das elektrische Schaltelement (6) unterhalb der Außenhülle (1) angeordnet ist.

5. Gerät nach Anspruch 4, **dadurch gekennzeichnet**, daß die Außenhülle (1) mindestens im Bereich des elektrischen Schaltelements (6) elastisch ausgebildet ist.

6. Gerät nach Anspruch 5, **dadurch gekennzeichnet**, daß durch eine besondere Ausgestaltung (Textur, Höhe) des elastischen Bereiches (11, 12) eine Funktionszuordnung des jeweiligen elektrischen Schaltelements (6) erfolgt.

7. Gerät nach einem der vorhergehenden Ansprüche, **dadurch gekennzeichnet**, daß ein Druckunterschied im Geräteinneren durch eine Membran ausgeglichen wird.

8. Gerät nach einem der vorhergehenden Ansprüche, **dadurch gekennzeichnet**, daß eine im Geräteinneren befindliche Trockenpatrone Feuchtigkeit aus dem Geräteinneren aufnimmt.

9. Gerät nach einem der vorhergehenden Ansprüche, **dadurch gekennzeichnet**, daß eine im Geräteinneren befindliche Katalysatorpatrone Wasserstoff aus dem Geräteinneren aufnimmt und/oder umwandelt.

10. Gerät nach einem der vorhergehenden Ansprüche, **dadurch gekennzeichnet**, daß das Energieniveau des Akkumulators (3) durch Signal (optisch, akustisch, fühlbar) durch das Gerät angezeigt wird.

11. Gerät nach einem der vorhergehenden Ansprüche, **dadurch gekennzeichnet**, daß der Ladezustand des Akkumulators (3) durch Signal (optisch, akustisch) durch die Ladeeinheit (9) angezeigt wird.
